# EUROPÄISCHE PATENTSCHRIFT

(11) **EP 4 422 545 B1**
(45) Veröffentlichungstag und Bekanntmachung des Hinweises auf die Patenterteilung: **29.01.2025**
(21) Anmeldenummer: 23833044.3
(22) Anmeldetag: 14.12.2023
(51) Int. Cl.: A61C 1/08, A61C 8/00

(54) **SYSTEM ZUR VORBEREITUNG UND/ODER DURCHFÜHRUNG EINER ZAHNIMPLANTATSINSERTION**
SYSTEM FOR PREPARING FOR AND/OR CARRYING OUT A DENTAL IMPLANT INSERTION
SYSTÈME DE PRÉPARATION ET/OU DE RÉALISATION D'UNE INSERTION D'IMPLANT DENTAIRE

(30) Priorität: 22.12.2022 DE 102022134517
(43) Veröffentlichungstag der Anmeldung: 04.09.2024
(73) Patentinhaber: TRI Dental Implants Int. AG, 6331 Hünenberg (CH)
(72) Erfinder: VENANZONI, Sandro, 8051 Zuerich (CH); PEREZ, Rafael, 79106 Freiburg (DE)
(74) Vertreter: Witte, Weller & Partner Patentanwälte mbB
(86) Internationale Anmeldenummer: PCT/EP2023/085745
(87) Internationale Veröffentlichungsnummer: WO 2024/132826

(56) Entgegenhaltungen:
- ES-A1- 2 425 695
- ES-A1- 2 425 695
- JP-A- 2022 081 391
- JP-A- 2022 081 391
- KR-B1- 101 446 064
- KR-B1- 101 550 759
- KR-B1- 101 550 759
- US-A1- 2015 282 894
- US-A1- 2016 199 151
- US-A1- 2016 199 151

## Beschreibung

Die vorliegende Erfindung betrifft ein System zur Vorbereitung und/oder Durchführung einer Zahnimplantatsinsertion und ein entsprechendes Verfahren, bei dem dieses System zum Einsatz kommt.

Genauer gesagt, handelt es sich bei dem erfindungsgemäßen System um ein zahnmedizinisches System, welches zur Erzeugung und/oder Bearbeitung einer Bohrung, die in einen Kieferknochen und/oder in eine den Kieferknochen umgebende Schleimhaut eingebracht wird, verwendbar ist. Eine mit dem erfindungsgemäßen System erzeugte und/oder bearbeitete Bohrung ist zur Einbringung (Insertion) eines Zahnimplantats vorgesehen.

Der Begriff "Zahnimplantat" wird umgangssprachlich häufig uneinheitlich und oft fälschlicherweise für das Gesamtgebilde einer Zahnprothese verwendet. Daher sei an dieser Stelle klargestellt, dass unter einem "Zahnimplantat" im zahnmedizinischen und vorliegenden Sinne nur der Implantatkörper verstanden wird, also die künstliche Zahnwurzel, die im Kiefer des Patienten implantiert wird. Häufig wird anstelle des Begriffs "Zahnimplantat" daher auch der Begriff "Implantatkörper" verwendet. Im Weiteren wird jedoch einheitlich der Begriff "Zahnimplantat" für den genannten Teil einer Zahnprothese verwendet.

Es ist leicht nachvollziehbar, dass die für solche Zahnimplantate notwendigen Bohrungen auf sehr exakte Art und Weise in den Kieferknochen eines Patienten eingebracht werden müssen. Dies bedarf einer ausführlichen Planung und Vorbereitung sowie einer hohen Erfahrung des Operateurs. Sowohl die Position und räumliche Ausrichtung als auch die Größe (Durchmesser) und Tiefe (Länge) der Bohrung müssen sehr exakt und individuell an die Anatomie des jeweiligen Patienten angepasst sein.

Um diesen Prozess zu vereinfachen, werden häufig zahnmedizinische Bohrführungssysteme verwendet, bei denen eine Art Schablone als Führungsvorrichtung für die zahnmedizinischen Bohrer zum Einsatz kommt, die auf den Kieferknochen oder die den Kieferknochen umgebende Schleimhaut aufgesetzt wird. Eine solche Schablone wird im Vorfeld individuell auf die Anatomie des Patienten angepasst, entweder anhand eines herkömmlichen durch plastischen Abdruck gewonnenen Modells oder anhand eines digitalen 3D-Modells, welches mit Hilfe eines bildgebenden Verfahrens (z.B. Röntgen, CT oder Intra-Oral-Scanning) vorab erzeugt wurde.

In einer solchen Schablone ist eine Hülse mit einer darin befindlichen Durchgangsöffnung vorgesehen, durch welche die zur Erzeugung und/oder Bearbeitung der Bohrung verwendeten Instrumente, welche meist als Bohrer ausgebildet sind, hindurchführbar sind. Der Innendurchmesser dieser in der Hülse vorgesehenen Durchgangsöffnung ist an den Außendurchmesser der Instrumente (Bohrer) zur Einbringung und/oder Bearbeitung der Bohrung derart angepasst, dass sich die Instrumente durch die Durchgangsöffnung hindurch in den Kieferknochen einführen lassen und während der Bearbeitung durch die Hülse geführt werden.

Auf diese Weise ist eine exakte Positionierung und räumliche Ausrichtung der Bohrung für das Zahnimplantat bereits durch die Schablone bzw. die darin befindliche Hülse vorgegeben. Die genannte Hülse kann dabei sowohl ein integraler Bestandteil der Schablone sein oder alternativ dazu als separates Bauteil ausgestaltet sein, welches lösbar an der Schablone anbringbar ist.

Mit Hilfe der an der Schablone vorgesehenen Hülse lässt sich zudem auch die Tiefe der Bohrung vorgeben. Dies wird typischerweise durch ein an dem Bearbeitungsinstrument (z.B. Bohrer) angeordnetes Anschlagelement bewirkt, welches häufig als eine Art Ringbund am Schaft des Instruments angeordnet ist und beim Hindurchführen des Instruments durch die Durchgangsöffnung der Hülse auf der freien Oberkante der Hülse zur Anlage bringbar ist. Diese Anlage des Anschlagelements an der Oberkante der Hülse begrenzt somit die Eindringtiefe des Bearbeitungsinstruments in den Kieferknochen.

Eine solche beispielhafte Anordnung zur Vorbereitung und Durchführung einer Insertion eines Zahnimplantats ist aus der DE 10 2008 003 403 A1 bekannt.

In der EP 2 163 220 A1 wurde ein solches zahnmedizinisches Bohrführungssystem dahingehend weiterentwickelt, dass die als Schablone ausgebildete Führungsvorrichtung mit mehreren ineinander steckbaren, separaten Führungshülsen ausgebildet ist. Diese ineinander steckbaren, separaten Führungshülsen haben insbesondere den Vorteil, dass während der zahnmedizinischen Implantat-Behandlung die Herstellung einer Kieferbohrung mit unterschiedlichen Bohrerdurchmessern durchführbar ist. Beispielsweise lassen sich mit Hilfe dieses Systems die inneren Führungshülsen nacheinander entnehmen, um den Durchmesser der Durchgangsöffnung der Hülse schrittweise zu vergrößern. Auf diese Weise lässt sich zunächst ein Bohrer mit vergleichsweise kleinem Durchmesser durch die Hülse hindurchführen und anschließend können schrittweise Bohrer größeren Durchmessers verwendet werden, die durch die Hülsen größeren Durchmessers längsgeführt werden.

Aus der WO 2014/075771 A1 ist ferner eine Führungsvorrichtung zur Führung von Implantat-Bohrungen bekannt, bei der die an der Schablone angeordneten Hülsen einen seitlichen Längsschlitz aufweisen, der die Einführung des Bearbeitungsinstruments vereinfacht. Das Bearbeitungsinstrument bzw. der Bohrer muss dann nicht mehr von oben in die Durchgangsöffnung der Hülse eingesetzt werden, sondern lässt sich seitlich in diese einbringen. Dies ist enorm platzsparend und damit für den Patienten sehr angenehm, bedenkt man, dass der im Mundraum des Patienten vorherrschende Platz meist sehr eingeschränkt ist.

Wenngleich sich die oben genannten Anordnungen in der Praxis als durchaus vorteilhaft erwiesen haben, gibt es dennoch Raum für Verbesserungen. Beispielsweise wäre eine erhöhte Flexibilität dahingehend wünschenswert, dass eine in der Führungsvorrichtung vorgesehene Hülse für unterschiedliche Bearbeitungsinstrumente verwendbar ist und sich die Hülse zur Führung unterschiedlicher Bohrer eignet, ähnlich wie dies bereits in der EP 2 163 220 A1 vorgeschlagen wurde. Die darin beschriebene Lösung ist jedoch im Hinblick auf die Stabilität der Führung nachteilhaft, da hier mehrere Führungshülsen lose ineinandergesteckt sind. Zudem ist diese Lösung technisch relativ komplex und birgt Sicherheitsrisiken.

Dementsprechend ist es eine Aufgabe der vorliegenden Erfindung, ein System und ein Verfahren zur Vorbereitung und/oder Durchführung einer Zahnimplantatsinsertion dahingehend weiterzuentwickeln, dass eine Führung mehrerer unterschiedlicher Instrumente während der Erzeugung und/oder Bearbeitung einer Zahnimplantatbohrung auf mechanisch einfache und stabile Art und Weise vordefiniert möglich ist.

Ein System zur Unterstützung der Erstellung von Bohrungen in der Mundhöhle, welches die Grundlage für den Oberbegriff des Anspruchs 1 bildet, ist aus der JP 2022081391 A bekannt. Weitere beispielhafte System zur Vorbereitung und/oder Durchführung einer Zahnimplantatsinsertion sind in den folgenden Druckschriften offenbart: US 2016/199151 A1, KR 101550759 B1 und ES 2425695 A1.

Gemäß der vorliegenden Erfindung wird diese Aufgabe durch ein System gemäß Anspruch 1 zur Vorbereitung und/oder Durchführung einer Zahnimplantatsinsertion gelöst, welches folgende Bauteile aufweist:
- ein erstes Instrument, das dazu eingerichtet ist, eine Bohrung in einem Kieferknochen und/oder in einer den Kieferknochen umgebenden Schleimhaut zu erzeugen oder zu bearbeiten, wobei das erste Instrument als Bohrwerkzeug, Senkwerkzeug, Schlichtwerkzeug, Räumwerkzeug, Gewindebohrwerkzeug oder Implant-Einbringinstrument ausgebildet ist und einen ersten Schaft, ein erstes Anschlagelement und eine an dem ersten Schaft stirnseitig angeordnete erste Bearbeitungsspitze aufweist, wobei das erste Anschlagelement von dem ersten Schaft radial absteht und eine erste Anschlagfläche aufweist, und wobei das erste Anschlagelement fix an dem ersten Schaft angeordnet ist,
- ein zweites Instrument, das dazu eingerichtet ist, die Bohrung in dem Kieferknochen und/oder in der Schleimhaut zu erzeugen oder zu bearbeiten oder ein Zahnimplantat in die Bohrung einzubringen, wobei das zweite Instrument als Bohrwerkzeug, Senkwerkzeug, Schlichtwerkzeug, Räumwerkzeug, Gewindebohrwerkzeug oder Implant-Einbringinstrument ausgebildet ist und einen zweiten Schaft, ein zweites Anschlagelement und eine an dem zweiten Schaft stirnseitig angeordnete zweite Bearbeitungsspitze aufweist, wobei das zweite Anschlagelement von dem zweiten Schaft radial absteht und eine zweite Anschlagfläche, die sich in Form und/oder Größe von der ersten Anschlagfläche unterscheidet, aufweist, und wobei das zweite Anschlagelement fix an dem zweiten Schaft angeordnet ist,
- eine Führungsvorrichtung, die auf zumindest einem Zahn, dem Kieferknochen und/oder der Schleimhaut mittelbar oder unmittelbar positionierbar ist und zumindest eine Hülse aufweist, die der Führung des ersten und zweiten Instruments während des Erzeugens und/oder Bearbeitens der Bohrung dient und eine entlang einer Längsachse verlaufende Durchgangsöffnung hat, durch welche das erste Instrument und das zweite Instrument jeweils hindurchführbar sind,
   wobei die Hülse eine mit der ersten Anschlagfläche korrespondierende erste Gegenanschlagfläche und eine mit der zweiten Anschlagfläche korrespondierende zweite Gegenanschlagfläche aufweist, und wobei die zweite Gegenanschlagfläche entlang der Längsachse versetzt zu der ersten Gegenanschlagfläche angeordnet ist.

Gemäß einem zweiten Aspekt der vorliegenden Erfindung wird die oben genannte Aufgabe durch ein Verfahren zur Vorbereitung und/oder Durchführung einer Zahnimplantatsinsertion gelöst, welches die folgenden Verfahrensschritte aufweist:
- Bereitstellen des erfindungsgemäßen Systems;
- Platzieren der Führungsvorrichtung auf zumindest einem Zahn, einem Kieferknochen und/oder einer den Kieferknochen umgebenden Schleimhaut;
- Erzeugen oder Bearbeiten einer Bohrung in dem Kieferknochen und/der Schleimhaut, mithilfe des ersten Instruments, wobei das erste Instrument durch die in der Hülse der Führungsvorrichtung vorgesehene Durchgangsöffnung hindurchgeführt wird, bis die erste Anschlagfläche an der ersten Gegenanschlagfläche anschlägt; und
- Erzeugen oder Bearbeiten der Bohrung in dem Kieferknochen und/der Schleimhaut oder Einbringen eines Zahnimplantats in die Bohrung, mithilfe des zweiten Instruments, wobei das zweite Instrument durch die in der Hülse der Führungsvorrichtung vorgesehene Durchgangsöffnung hindurchgeführt wird, bis die zweite Anschlagfläche an der zweiten Gegenanschlagfläche anschlägt.

Der vorliegenden Erfindung liegt die Idee zugrunde, ein System aus einer Führungsvorrichtung und zweier darin geführt verwendbaren Instrumente bereitzustellen, die zur Erzeugung und/oder Bearbeitung einer Zahnimplantatsbohrung verwendbar sind.

Die Führungsvorrichtung kann, wie gewohnt, als eine Art Schablone ausgestaltet sein und, wie üblich, zumindest eine Hülse aufweisen, die der Führung der beiden Instrumente während der Bearbeitung dient. Die Hülse kann in die Führungsvorrichtung integriert sein (integral mit dieser verbunden sein) oder als separates Bauteil ausgestaltet sein, das lösbar in die Führungsvorrichtung eingesetzt ist. Anders als bisher bekannt, weisen die beiden Instrumente unterschiedliche Anschlagelemente auf, die sich in Form und/oder Größe voneinander unterscheiden und jeweils eine Anschlagfläche aufweisen. Korrespondierend dazu sind an der Hülse zwei verschiedene Gegenanschlagflächen vorgesehen, die mit den Anschlagflächen, welche an den Anschlagelementen der beiden Instrumente angeordnet sind, korrespondieren. Die beiden an der Hülse vorgesehenen Gegenanschlagflächen sind entlang der Längsrichtung der Durchgangsöffnung der Hülse versetzt zueinander angeordnet.

Somit kommen die Anschlagelemente der beiden Instrumente bei deren Verwendung an unterschiedlichen Gegenanschlagflächen an der Hülse zum Anschlag. Auf diese Art und Weise lassen sich zwei verschiedene Eindringtiefen auf einfache Art und Weise vorab definieren. Durch die verschiedenen Anschlagflächen und versetzt zueinander angeordneten Gegenanschlagflächen ist, mit anderen Worten, die maximal mögliche Eindringtiefe jedes der beiden Instrumente bereits vorab definiert. Somit lassen sich beide Instrumente mit Hilfe der in der Führungsvorrichtung vorgesehenen Hülse während der Bearbeitung führen, wobei sich für das erste Instrument eine andere maximal mögliche Eindringtiefe vorgeben lässt als für das zweite Instrument.

Beispielsweise lässt sich das erste Instrument weiter durch die in der Hülse vorgesehene Durchgangsöffnung hindurchführen als das zweite Instrument. Beispielsweise ist die maximal mögliche Eindringtiefe, die das erste Instrument erreicht, bis das daran angeordnete erste Anschlagelement an der ersten Gegenanschlagfläche der Hülse anschlägt, größer als die maximal mögliche Eindringtiefe, die das zweite Instrument erreicht, bis das daran angeordnete zweite Anschlagelement an der an der Hülse vorgesehenen zweiten Gegenanschlagfläche anschlägt.

Die Möglichkeit des Anschlags der beiden Anschlagelemente an unterschiedlichen Gegenanschlagflächen der Hülse wird insbesondere dadurch gewährleistet, dass die an den Anschlagelementen der beiden Instrumente vorgesehenen Anschlagflächen in Form und/oder Größe unterschiedlich ausgestaltet sind. Entsprechend sind auch die beiden an der Hülse vorgesehenen, dazu korrespondierenden Gegenanschlagflächen in Form und/oder Größe zueinander unterschiedlich ausgestaltet.

Die Form und/oder Größe der ersten Gegenanschlagfläche ist vorzugsweise an die Form und/oder Größe der ersten Anschlagfläche angepasst. Die Form und/oder Größe der zweiten Gegenanschlagfläche ist vorzugsweise an die Form und/oder Größe der zweiten Anschlagfläche angepasst.

Das erfindungsgemäße System ist somit sehr einfach und exakt definiert mit Instrumenten unterschiedlicher Art und/oder Größe einsetzbar. Bei den Instrumenten handelt es sich um ein Bohrwerkzeug (Dentalbohrer), ein Senkwerkzeug, ein Schlichtwerkzeug, ein Räumwerkzeug, ein Gewindebohrwerkzeug oder ein Implant-Einbringinstrument.

Die oben genannte Aufgabe ist somit vollständig gelöst.

Gemäß einer Ausgestaltung ist die Form und/oder Größe der ersten Anschlagfläche derart ausgestaltet, dass das erste Anschlagelement beim Hindurchführen des ersten Instruments durch die Durchgangsöffnung an der zweiten Gegenanschlagfläche vorbei in die Durchgangsöffnung einführbar ist, bis die erste Anschlagfläche an der ersten Gegenanschlagfläche anschlägt, und wobei die Form und/oder Größe der zweiten Anschlagfläche derart ausgestaltet ist, dass das zweite Instrument durch die Durchgangsöffnung hindurchführbar ist, bis die zweite Anschlagfläche an der zweiten Gegenanschlagfläche anschlägt.

Die Form und/oder Größe der ersten Anschlagfläche ist gemäß dieser Ausgestaltung also derart gewählt, dass diese nicht an der zweiten Gegenanschlagfläche anschlägt, sondern nur an der ersten Gegenanschlagfläche anschlägt. Auf diese Weise kann das an dem ersten Instrument angeordnete erste Anschlagelement beim Einführen des ersten Instruments in die Durchgangsöffnung an der zweiten Gegenanschlagfläche der Hülse vorbeigeführt werden, ohne daran anzuschlagen.

Vorzugsweise ist die zweite Gegenanschlagfläche näher an einer Einführungsöffnung der Hülse, welche durch ein Ende der Durchgangsöffnung gebildet wird, angeordnet als die erste Gegenanschlagfläche.

Wird das erste Instrument also an der Einführungsöffnung in die Durchgangsöffnung eingeführt, so passiert es mit seinem ersten Anschlagelement die Gegenanschlagfläche, bevor es an der ersten Gegenanschlagfläche anschlägt.

Vorzugsweise umgibt sowohl die erste Gegenanschlagfläche als auch die zweite Gegenanschlagfläche die Durchgangsöffnung jeweils zumindest teilweise.

Besonders bevorzugt bildet sowohl die erste Gegenanschlagfläche als auch die zweite Gegenanschlagfläche jeweils einen Rand der Durchgangsöffnung.

Zumindest eine der beiden Gegenanschlagflächen ist vorzugsweise im Inneren der Hülse in der oder angrenzend an die Durchgangsöffnung angeordnet. Insbesondere die erste Gegenanschlagfläche ist vorzugsweise im Inneren der Hülse in der Durchgangsöffnung oder angrenzend an diese angeordnet.

Gemäß einer bevorzugten Ausgestaltung ist die Durchgangsöffnung als Stufenbohrung ausgestaltet und die erste Gegenanschlagfläche ist an einer Stufe der Stufenbohrung im Inneren der Hülse angeordnet.

Die zweite Gegenanschlagfläche kann an einer weiteren Stufe einer solchen Stufenbohrung im Inneren der Hülse angeordnet sein, sie kann jedoch auch an einer Stirnseite der Hülse um die Durchgangsöffnung herum angeordnet sein.

Gemäß einer Ausgestaltung ist ein Durchmesser des ersten Anschlagelements D₁, ein Durchmesser des zweiten Anschlagelements D₂, ein Innendurchmesser der ersten Gegenanschlagfläche d₁ und ein Innendurchmesser der zweiten Gegenanschlagfläche d₂, wobei gilt: D₂ > d₂ ≥ D₁ > d₁.

Auf diese Weise ist sichergestellt, dass das erste Instrument mit seinem ersten Anschlag nur an der ersten Gegenanschlagfläche, aber nicht an der zweiten Gegenanschlagfläche anschlägt, wenn das erste Instrument in die Durchgangsöffnung eingeführt wird. Das zweite Instrument schlägt mit seinem zweiten Anschlagelement hingegen direkt an der zweiten Gegenanschlagfläche an, so dass das zweite Anschlagelement gar nicht erst bis zu der ersten Gegenanschlagfläche vordringt, wenn das zweite Instrument in die Durchgangsöffnung eingeführt wird.

Die Begriffe "Durchmesser" und "Innendurchmesser" sollen an dieser Stelle keine spezielle Form bzw. Querschnittsform, bspw. eine Kreisform oder eine Kreisringform, der Anschlagelemente und/oder der Gegenanschlagflächen implizieren. Zwar sind die Anschlagelemente vorzugsweise jeweils ring- oder scheibenförmig ausgestaltet und die Gegenanschlagflächen vorzugsweise jeweils ringförmig oder ringausschnittsförmig ausgestaltet. Die Anschlagelemente können jedoch auch in beliebiger anderer Form ausgestaltet sein, sie sind jedoch vorzugsweise als Rotationskörper ausgestaltet. Ebenso sind die Gegenanschlagflächen vorzugsweise als Ring- oder Ringausschnittsflächen ausgestaltet (nicht zwangsläufig als Kreisring- oder Kreisringausschnitts-Flächen).

Gemäß einer weiteren Ausgestaltung ist ein Durchmesser der Durchgangsöffnung in einem Abschnitt zwischen einem oberen Ende der Hülse und der ersten Gegenanschlagfläche gleich groß wie oder größer als der Durchmesser des ersten Anschlagelements, aber kleiner als ein Durchmesser des zweiten Anschlagelements.

Diese Ausgestaltung ist insbesondere dann bevorzugt, wenn die zweite Gegenanschlagfläche außerhalb der Durchgangsöffnung an dem oberen Ende der Hülse angeordnet ist. Aufgrund der genannten Durchmesserverhältnisse des Abschnitts der Durchgangsöffnung zwischen der Einführungsöffnung der Hülse und der ersten Gegenanschlagfläche lässt sich nur das an dem ersten Instrument angeordnete erste Anschlagelement durch die Einführungsöffnung hindurch in die Durchgangsöffnung der Hülse einführen, nicht aber das an dem zweiten Instrument angeordnete zweite Anschlagelement. Letzteres schlägt bereits vorher mit der an dem zweiten Anschlagelement angeordneten zweiten Anschlagfläche an der zweiten Gegenanschlagfläche am oberen Ende der Hülse an.

Ein Außendurchmesser der ersten Gegenanschlagfläche kann gleich groß ausgestaltet sein wie der Innendurchmesser der zweiten Gegenanschlagfläche. Dies führt bspw. dazu, dass die Durchgangsöffnung der Hülse in einem Abschnitt zwischen der ersten Gegenanschlagfläche und der zweiten Gegenanschlagfläche entlang der Längsachse der Durchgangsöffnung einen konstanten Querschnitt hat, d.h. zylindrisch ist. Dadurch wird die Einführung des an dem ersten Instrument angeordneten ersten Anschlagelements in die Durchgangsöffnung vereinfacht.

Gemäß einer weiteren Ausgestaltung verlaufen die erste Gegenanschlagfläche und die zweite Gegenanschlagfläche jeweils quer, vorzugsweise orthogonal zu der Längsachse der Durchgangsöffnung. Insbesondere ist es bevorzugt, dass die erste Gegenanschlagfläche um die Längsachse der Durchgangsöffnung herum verläuft und ringsherum einen zweiten konstanten Winkel zu der Längsachse hat. Dieser Winkel ist besonders bevorzugt 90°, kann jedoch auch ein anderer spitzer Winkel kleiner 90° sein.

Selbiges gilt auch für die Ausrichtung der zweiten Gegenanschlagfläche. Auch diese verläuft vorzugsweise um die Längsachse der Durchgangsöffnung herum und ist ringsherum unter einem konstanten Winkel zu der Längsachse ausgerichtet. Auch dieser Winkel beträgt vorzugsweise 90°, kann jedoch auch kleiner 90° sein.

Es ist ferner bevorzugt, dass beide Gegenanschlagflächen unter dem gleichen Winkel relativ zu der Längsachse der Durchgangsöffnung ausgerichtet sind. Letzteres ist jedoch nicht zwangsläufig notwendig, da die hierzu korrespondierenden Anschlagelemente an den beiden Instrumenten unterschiedlich zueinander ausgestaltet sein können.

Besonders bevorzugt ist es, wenn die erste Gegenanschlagfläche und die zweite Gegenanschlagfläche orthogonal zu der Längsachse der Durchgangsöffnung und damit parallel zueinander ausgerichtet sind.

Erfindungsgemäß weist das erste Instrument einen ersten Schaft, das erste Anschlagelement, welches von dem ersten Schaft radial absteht, und eine an dem ersten Schaft stirnseitig angeordnete erste Bearbeitungsspitze auf. Ebenso weist das zweite Instrument vorzugsweise einen zweiten Schaft, das zweite Anschlagelement, welches von dem zweiten Schaft radial absteht, und eine an dem zweiten Schaft stirnseitig angeordnete zweite Bearbeitungsspitze auf. Das erste Anschlagelement ist fix an dem ersten Schaft angeordnet. Ebenso ist das zweite Anschlagelement fix an dem zweiten Schaft angeordnet.

Gemäß einer weiteren Ausgestaltung weist das erste Instrument einen ersten Schaftabschnitt auf, der zwischen dem ersten Anschlagelement und der ersten Bearbeitungsspitze angeordnet ist und einen ersten Durchmesser hat, welcher kleiner als ein Durchmesser des ersten Anschlagelements und größer als ein Durchmesser der ersten Bearbeitungsspitze ist. Das zweite Instrument weist gemäß dieser Ausgestaltung einen zweiten Schaftabschnitt auf, der zwischen dem zweiten Anschlagelement und der zweiten Bearbeitungsspitze angeordnet ist und einen zweiten Durchmesser hat, welcher kleiner als ein Durchmesser des zweiten Anschlagelements, größer als ein Durchmesser der zweiten Bearbeitungsspitze und gleich groß wie der erste Durchmesser ist.

Die beiden genannten Schaftabschnitte, deren Durchmesser gleich groß ist und von denen jeweils einer an jedem der beiden Instrumente angeordnet ist, dienen der Längsführung des jeweiligen Instruments innerhalb der Hülse während der Erzeugung und/oder Bearbeitung der Bohrung. Dementsprechend ist in der Hülse eine die Durchgangsöffnung radial begrenzende Innenmantelfläche angeordnet, deren Querschnittsform und -größe an die Querschnittsform und -größe des ersten und zweiten Schaftabschnitts angepasst ist, wobei die erste Gegenanschlagfläche entlang der Längsachse zwischen der zweiten Gegenanschlagfläche und der Innenmantelfläche angeordnet ist.

Diese Innenmantelfläche dient als Gegenstück zu den beiden oben genannten Schaftabschnitten, die an den Instrumenten angeordnet sind. Beim Einführen des ersten Instruments in die Hülse, gleitet der erste Schaftabschnitt an der Innenmantelfläche der Hülse ab, wodurch die Längsführung garantiert wird. Ebenso gleitet der zweite Schaftabschnitt beim Einführen des zweiten Instruments in die Hülse an der Innenmantelfläche der Hülse ab, so dass auch das zweite Instrument längs, also entlang der Längsachse innerhalb der Hülse geführt wird.

Ähnlich wie in der WO 2004/075771 A1 vorgeschlagen, weist auch die Hülse des erfindungsgemäßen Systems vorzugsweise einen entlang der Längsachse verlaufenden Schlitz auf, der in die Durchgangsöffnung mündet und dessen Breite größer als ein Durchmesser der ersten Bearbeitungsspitze und größer als ein Durchmesser der zweiten Bearbeitungsspitze ist. Somit lassen sich beide Instrumente seitlich und damit möglichst platzsparend in die Hülse der Führungsvorrichtung einführen. Der Vollständigkeit halber sei erwähnt, dass die Führungsvorrichtung nur eine Hülse oder aber auch mehrere, miteinander verbundene Hülsen aufweisen kann. Im Falle mehrerer, miteinander verbundener Hülsen, lässt sich die Führungsvorrichtung als Schablone für mehrere zu erzeugende Bohrungen im Kiefer des Patienten verwenden, bspw. wenn der Patient mit mehr als nur einem Zahnimplantat versorgt werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der vorliegenden Erfindung ist in den Zeichnungen dargestellt und wird in der nachfolgenden Beschreibung näher erläutert. Es zeigen:
- Fig. 1: ein Ausführungsbeispiel eines erfindungsgemäßen Systems inklusive dessen Bauteile in perspektivischer Ansicht;
- Fig. 2: eine Hülse einer in Fig. 1 gezeigten und zu dem erfindungsgemäßen System gehörenden Führungsvorrichtung in perspektivischer Detailansicht (Fig. 2A) sowie in Längsschnittansicht (Fig. 2B);
- Fig. 3A-3C: eine Veranschaulichung einer Einführung eines in Fig. 1 gezeigten Instruments in die in Fig. 2 gezeigte Hülse; und
- Fig. 4: eine Längsschnittansicht des in die Hülse eingeführten ersten Instruments (Fig. 4A) sowie des in die Hülse eingeführten zweiten Instruments (Fig. 4B).

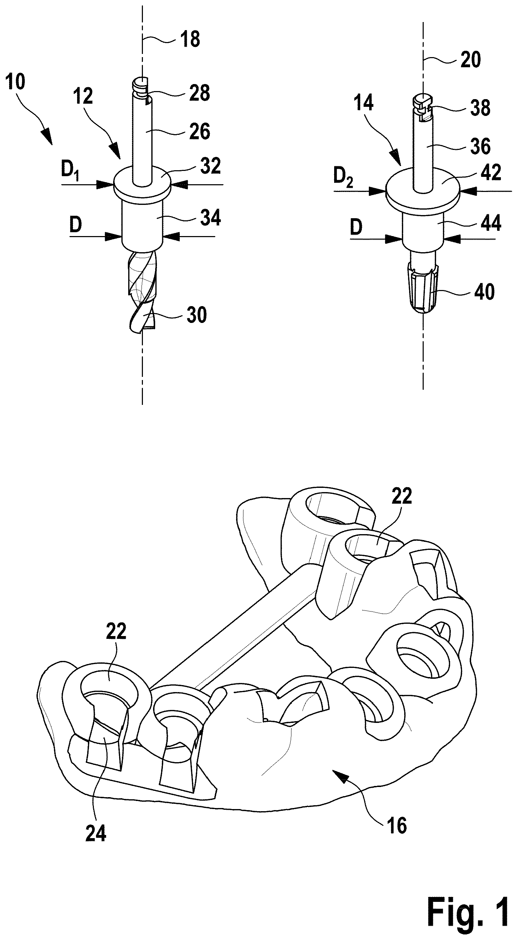

Fig. 1 zeigt ein Ausführungsbeispiel des erfindungsgemäßen Systems, welches insbesondere zur Vorbereitung und/oder Durchführung einer Zahnimplantatsinsertion verwendbar ist. Das System ist in seiner Gesamtheit mit der Bezugsziffer 10 gekennzeichnet.

Das System 10 weist ein erstes Instrument 12, ein zweites Instrument 14 und eine Führungsvorrichtung 16 auf. Die beiden Instrumente 12, 14 dienen zum Erzeugen oder Bearbeiten einer Bohrung in einem Kieferknochen und/oder in einer den Kieferknochen umgebenden Schleimhaut und/oder zum Einbringen eines Zahnimplantats in die Bohrung. Eine solche Bohrung ist notwendige Voraussetzung für die spätere Insertion eines Zahnimplantats in den Kieferknochen eines Patienten. Die Führungsvorrichtung 16 dient der Führung der beiden Instrumente 12, 14, welche typischerweise hintereinander (nicht gleichzeitig) verwendet werden. Selbstverständlich lässt sich die Führungsvorrichtung 16 auch zur Führung weiterer Instrumente, also z.B. zur Führung eines dritten und vierten Instruments verwenden.

Bei dem ersten Instrument 12 handelt es sich in dem vorliegend gezeigten Ausführungsbeispiel um einen zahnmedizinischen Bohrer zur Erzeugung der Zahnimplantat-Bohrung. Bei dem zweiten Instrument 14 handelt es sich in dem vorliegend gezeigten Ausführungsbeispiel um ein Senkwerkzeug zur Bearbeitung eines Teils der Zahnimplantat-Bohrung. Typischerweise wird damit der obere Abschnitt der Zahnimplantat-Bohrung bearbeitet, um die spätere Einführung des Zahnimplantats zu vereinfachen.

In anderen, hier nicht gezeigten Ausführungsbeispielen des erfindungsgemäßen Systems 10 kann es sich bei den Instrumenten 12, 14 auch um andere Arten von zahnmedizinischen Instrumenten, bspw. Fräs-, Schlicht- oder Räumwerkzeuge oder Werkzeuge zur Einbringung eines Zahnimplantats handeln. Ebenso ist es möglich, dass beide Instrumente 12, 14 als Bohrwerkzeuge ausgestaltet sind, die bei der Erzeugung der Zahnimplantat-Bohrung hintereinander eingesetzt werden. Beispielsweise können die Instrumente 12, 14 als Bohrwerkzeuge mit Bearbeitungsspitzen unterschiedlichen Durchmessers und/oder Länge sein. Insgesamt sind dementsprechend viele Varianten solcher Instrumente erfindungsgemäß möglich. Generell ist es bevorzugt, dass es sich bei den Instrumenten 12, 14 jeweils um zahnmedizinische Instrumente handelt, welche bei deren Verwendung um deren jeweilige Längsachse 18, 20 rotiert werden.

Die Führungsvorrichtung 16 ist in dem vorliegenden Ausführungsbeispiel als eine Art Schablone ausgestaltet, die an die Anatomie des jeweiligen Patienten individuell angepasst ist. Die Führungsvorrichtung 16 ist dazu eingerichtet, mittelbar oder unmittelbar auf der Restbezahnung (zumindest einem Zahn) des Patienten, dem zu bearbeitenden Kieferknochen oder der darüberliegenden Schleimhaut aufgesetzt zu werden. Mit "mittelbar" ist an dieser Stelle gemeint, dass die Führungsvorrichtung 16 nicht zwangsläufig direkt auf die Schleimhaut oder den Kieferknochen des Patienten aufgesetzt werden muss, sondern es grundsätzlich auch möglich ist, dass Zwischenschichten oder weitere Elemente zwischen dem Kieferknochen und der Führungsvorrichtung 16 im Mundraum des Patienten angeordnet werden.

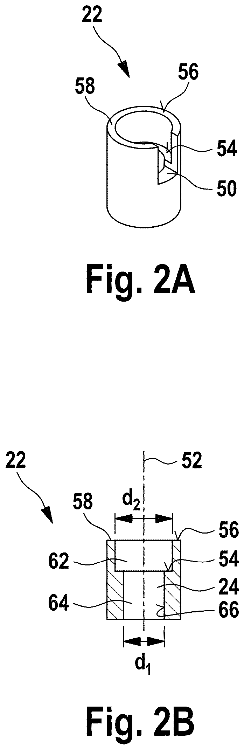

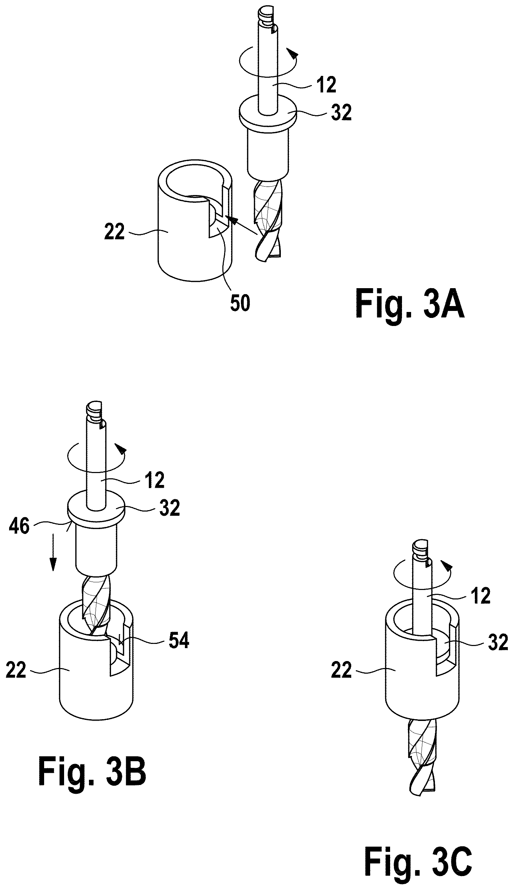

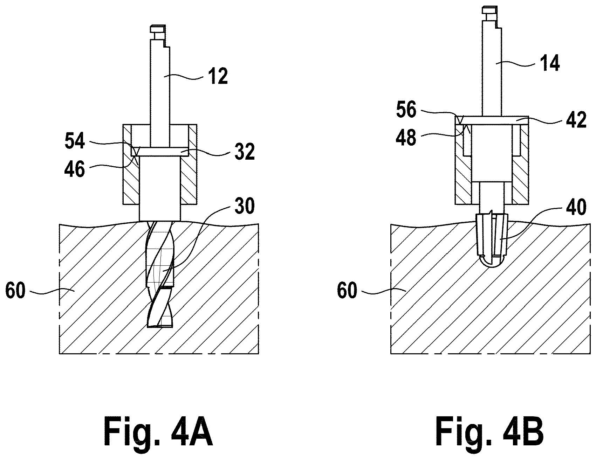

Die in Fig. 1 gezeigte Führungsvorrichtung 16 weist insgesamt sechs Hülsen 22 auf, die der Führung der Instrumente 12, 14 dienen (siehe auch Fig. 2A und 2B). Jede dieser Hülsen 22 hat eine Durchgangsöffnung 24, durch welche das erste und das zweite Instrument 12, 14, wie bspw. in Fig. 3 und Fig. 4 gezeigt, während der Bearbeitung hin durchführbar sind.

Die Position und räumliche Ausrichtung dieser Hülsen 22 wird bei der Herstellung der Führungsvorrichtung 16 typischerweise anhand eines 3D-Modells des Mundraums des jeweiligen Patienten sehr exakt geplant, um die Position und räumliche Lage der herzustellenden Implantat-Bohrungen definiert festzulegen. Eine solche Führungsvorrichtung 16 vereinfacht die Arbeit des Operateurs immens und verhindert insbesondere unerwünschte Fehlstellungen bzw. Fehlpositionierungen der zu implantierenden Zahnimplantate.

Es versteht sich, dass die Anzahl der an der Führungsvorrichtung 16 vorgesehenen Hülsen 22 je nach Anzahl der herzustellenden Zahnimplantat-Bohrungen variieren kann. Die Hülsen 22 selbst sind über die Führungsvorrichtung 16 miteinander mechanisch gekoppelt. Teile dieser Hülsen 22 können integral mit der Führungsvorrichtung 16 verbunden sein. Ebenso ist es möglich, dass ein oder mehrere weitere Teile der Hülsen 22 als separate Bauteile ausgestaltet sind, die bspw. in der Art eines Einsatzes in die Führungsvorrichtung 16 eingesetzt werden. Letzteres vereinfacht die standardisierte Herstellung einer solchen Hülse 22 unabhängig von der individuell an den Patienten anzupassenden Führungsvorrichtung 16.

Nachfolgend wird der Aufbau und die bestimmungsgemäße Art der Verwendung der Instrumente 12, 14 und der Hülsen 22 im Detail beschrieben.

Das erste Instrument weist einen entlang der Längsachse 18 verlaufenden Schaft 26 auf, welche vorliegend als "erster Schaft" bezeichnet wird. Am oberen Ende dieses Schafts 26 ist eine Schnittstelle 28 zur Kopplung des ersten Instruments 12 mit einer Bearbeitungsmaschine vorgesehen. Am unteren Ende des Schafts 26 weist das erste Instrument 12 eine Bearbeitungsspitze 30 auf, welche vorliegend als "erste Bearbeitungsspitze" bezeichnet wird und hier als Bohrspitze bzw. Bohrkopf ausgestaltet ist.

In etwa im mittleren Bereich des Schafts 26 weist das erste Instrument 12 ferner ein Anschlagelement 32 auf, welches vorliegend als "erstes Anschlagelement" bezeichnet wird. Das Anschlagelement 32 ist in dem vorliegend gezeigten Ausführungsbeispiel als eine Art Ringbund ausgestaltet, der radial von dem Schaft 26 absteht und die Form eines kreisringförmigen Tellers hat. Dieses Anschlagelement 32 kann integral mit dem Schaft 26 verbunden sein oder als separates Element ausgestaltet sein, welches auf den Schaft 26 aufgesetzt und mit diesem fix verbunden ist. Das Anschlagelement 32 dient als definierter Anschlag an der Hülse 22, um die Eindringtiefe des ersten Instruments 12 zu begrenzen, wenn dieses bei der Erzeugung der Implantat-Bohrung durch die Durchgangsöffnung 24 der jeweiligen Hülse 22 hindurch in den Kieferknochen des Patienten eindringt.

Unterhalb des Anschlagelements 32, also in einem Bereich zwischen dem Anschlagelement 32 und der Bearbeitungsspitze 30, weist das erste Instrument 12 ferner einen Schaftabschnitt 34 mit vergrößertem Durchmesser auf. Dieser Schaftabschnitt 34 wird vorliegend als "erster Schaftabschnitt" bezeichnet. Der Schaftabschnitt 34 dient insbesondere der Längsführung des Instruments 12 innerhalb der Hülse 22. Wie nachfolgend näher erläutert, gleitet dieser Schaftabschnitt 34 während der Bearbeitung an einer entsprechenden Gegenfläche, die im Inneren der Hülse 22 vorgesehen ist, ab.

Der Durchmesser D des ersten Schaftabschnitts 34 ist größer als der Durchmesser der ersten Bearbeitungsspitze 30, aber kleiner als der Durchmesser D₁ des ersten Anschlagelements 32.

Das zweite Instrument 14 ist insgesamt ähnlich aufgebaut wie das erste Instrument 12. Es besitzt einen Schaft 36, welcher vorliegend als "zweiter Schaft" bezeichnet wird, an dessen oberen Ende eine Schnittstelle 38 und dessen unteren Ende eine Bearbeitungsspitze 40 (vorliegend als "zweite Bearbeitungsspitze" bezeichnet) angeordnet ist. Die zweite Bearbeitungsspitze 40 ist, wie bereits erwähnt, als Bearbeitungsspitze eines Senkwerkzeugs ausgestaltet.

Ebenso wie das erste Instrument 12 weist auch das zweite Instrument 14 ein Anschlagelement 42 und einen Schaftabschnitt 44 auf, welche vorliegend als "zweites Anschlagelement" bzw. "zweiter Schaftabschnitt" bezeichnet werden. Während der Durchmesser D des zweiten Schaftabschnitts 44 vorzugsweise gleich groß gewählt ist wie der Durchmesser D des ersten Schaftabschnitts 34, ist der Durchmesser D₂ des zweiten Anschlagelements 42 größer als der Durchmesser D des ersten Anschlagelements 32.

Die Anschlagelemente 32, 42 weisen an ihrer Unterseite, die der jeweiligen Bearbeitungsspitze 30, 40 zugewandt ist, jeweils eine Anschlagfläche 46, 48 auf, die vorliegend als "erste Anschlagfläche" 46 bzw. "zweite Anschlagfläche" 48 bezeichnet werden (siehe Fig. 4A und 4B). Beide Anschlagflächen 46, 48 sind im vorliegend gezeigten Ausführungsbeispiel als planare, kreisringförmige Flächen ausgestaltet. Aufgrund des größeren Durchmessers D₂ des zweiten Anschlagelements 42 im Vergleich zu dem Durchmesser D₁ des ersten Anschlagelement 32 ist die zweite Anschlagfläche 48 größer als die erste Anschlagfläche 46.

Beide Instrumente 12, 14 lassen sich jeweils in die Hülse 22 einführen und dann durch die Durchgangsöffnung 24 hindurchführen. Dieser Vorgang ist in Fig. 3A-3C beispielhaft anhand des ersten Instruments 12 gezeigt. Wie daraus insbesondere ersichtlich ist, lässt sich das erste Instrument 12 (äquivalent auch das zweite Instrument 14) seitlich in die Hülse 22 einführe. Die Hülse 22 weist hierzu einen Schlitz 50 auf, der parallel zu der Längsachse 52 der Hülse 22 verläuft und in die Durchgangsöffnung 24 mündet. Anschließend lässt sich das Instrument 12 entlang der Längsachse 52 durch die Durchgangsöffnung 24 hindurchführen (Fig. 3B), bis das erste Anschlagelement 32 an der Hülse 22 anschlägt und die Bewegung des Instruments 12 entlang der Längsachse 52 begrenzt (Fig. 3C).

Der Aufbau der Hülse 22 ist im Detail in Fig. 2A und 2B dargestellt. Korrespondierend an den Instrumenten 12, 14 vorgesehenen Anschlagflächen 46, 48, weist die Hülse zwei Gegenanschlagflächen 54, 56 auf, die entlang der Längsachse 52 der Hülse 22 versetzt zueinander angeordnet sind. Die erste Gegenanschlagfläche 54 dient als Gegenanschlagfläche für die an dem ersten Instrument 12 angeordnete erste Anschlagfläche 46. Die zweite Gegenanschlagfläche 56 dient als Gegenanschlagfläche für die an dem zweiten Instrument 14 angeordnete zweite Anschlagfläche 48.

Die beiden Gegenanschlagflächen 54, 56 sind im vorliegend gezeigten Ausführungsbeispiel als planare, kreisringförmige Flächen ausgestaltet, wobei diese hier aufgrund des Schlitzes 50 streng genommen kreisringausschnittsförmig sind. Die erste Gegenanschlagfläche 54 ist in dem Inneren der Hülse 22 angeordnet. Die zweite Gegenanschlagfläche 56 ist an dem oberen Ende 58 der Hülse 22 angeordnet.

Ein Innendurchmesser d₁ der ersten Gegenanschlagfläche 54 ist kleiner als ein Innendurchmesser d₂ der zweiten Gegenanschlagfläche 56. Die Innendurchmesser d₁, d₂ der Gegenanschlagflächen 54, 56 sind auf die Durchmesser D₁, D₂ der Anschlagelemente 32, 34 der Instrumente 12, 14 vorzugsweise derart abgestimmt, dass gilt: D₂ > d₂ ≥ D₁ > d₁. Dementsprechend schlägt das erste Anschlagelement 32 des ersten Instruments 12 nur an der ersten Gegenanschlagfläche 54, nicht aber an der zweiten Gegenanschlagfläche 56 an. Das erste Anschlagelement 32 ist also beim Hindurchführen des ersten Instruments 12 durch die Durchgangsöffnung 24 an der zweiten Gegenanschlagfläche 56 vorbei in die Durchgangsöffnung einführbar, bis die erste Anschlagfläche 46 an der ersten Gegenanschlagfläche 54 anschlägt (siehe Fig. 3B, 3C und 4A). Fig. 4A zeigt die Endstellung, in der das erste Instrument 12 vollständig in die Hülse 22 eingeführt ist und die erste Bearbeitungsspitze 30 ihre maximale Eindringtiefe in den schematisch angedeuteten Kiefer 60 des Patienten erreicht hat. In dieser Situation liegt die erste Anschlagfläche 46 bündig an der ersten Gegenanschlagfläche 54 an.

Das zweite Instrument 14, dessen Anschlagelement 42 einen größeren Durchmesser D₂ hat, ist hingegen nur soweit durch die Durchgangsöffnung 24 hindurchführbar, bis die zweite Anschlagfläche 48 an der zweiten Gegenanschlagfläche 56 anschlägt. Fig. 4B zeigt die Endstellung des zweiten Instruments 14, in der das zweite Instrument 14 seine maximale Eindringtiefe in den Kieferknochen 60 des Patienten erreicht hat. Die zweite Anschlagfläche 48 liegt in dieser Situation an der zweiten Gegenanschlagfläche 56 bündig an. Das zweite Instrument 14 lässt sich somit nur bis zu einer vergleichsweise geringeren Tiefe durch die Hülse 22 hindurchführen.

Wie insbesondere aus Fig. 2B ersichtlich ist, ist die in der Hülse 22 befindliche Durchgangsöffnung 24 vorzugsweise als Stufenbohrung ausgestaltet. Die Durchgangsöffnung 24 weist somit zwei zylindrische Abschnitte 62, 64 unterschiedlichen Durchmessers auf. Im ersten Abschnitt 62, der zwischen dem oberen Ende 58 der Hülse 22 und der ersten Gegenanschlagfläche 54 angeordnet ist, entspricht der Durchmesser der Durchgangsöffnung 24 dem Innendurchmesser d₂ der zweiten Gegenanschlagfläche 56. Dieser Innendurchmesser d₂ ist gleich groß wie oder größer als der Durchmesser D₁ des ersten Anschlagelements 32. In dem zweiten Abschnitt 64 entspricht der Durchmesser der Durchgangsöffnung 24 dem Innendurchmesser d₁ der ersten Gegenanschlagfläche 54, welcher kleiner als der Durchmesser D₁ des ersten Anschlagelements 32 ist.

Aufgrund der zylindrischen Form des ersten Abschnitts 62 entspricht der Innendurchmesser d₂ der zweiten Gegenanschlagfläche 56 dem großen Aussendurchmesser der ersten Gegenanschlagfläche 54.

Eine die Durchgangsöffnung 24 in dem zweiten Abschnitt 64 begrenzende Innenmantelfläche 66 ist an die Schaftabschnitte 34, 44 angepasst. Diese Innenmantelfläche 66 dient nämlich als Gegenstück zu den beiden Schaftabschnitten 34, 44, um die Längsführung der Instrumente 12, 14 zu gewährleisten. Im in die Hülse 22 eingeführten Zustand fällt die Längsachse 18, 20 des jeweiligen Instruments 12, 14 vorzugsweise mit der Längsachse 52 der Hülse 22 zusammen. Der Durchmesser d₁ der Innenmantelfläche 66 ist vorzugsweise gleich groß oder größer als der Durchmesser d der beiden Schaftabschnitte 34, 44. Vorzugsweise ist der Durchmesser d₁ der Innenmantelfläche 66 nur um wenige Zehntel größer als der Durchmesser D der Schaftabschnitte 34, 44. Es gilt: d₁ ≥ D, vorzugsweise D + 5 mm ≥ d₁ ≥ D, besonders bevorzugt D + 1 mm ≥ d₁ ≥ d.

Die beiden Gegenanschlagflächen 54, 56 sind in dem vorliegend gezeigten Ausführungsbeispiel orthogonal zu der Längsachse 52 der Hülse 22 ausgerichtet. Ebenso ist die erste Anschlagfläche 46 orthogonal zu der Längsachse 18 des ersten Instruments 12 ausgerichtet. Entsprechend ist auch die zweite Anschlagfläche 48 orthogonal zu der Längsachse 20 des zweiten Instruments 14 ausgerichtet. Dies muss jedoch nicht zwangsläufig der Falls ein. Bevorzugt ist es jedoch, dass die erste Anschlagfläche 46 korrespondierend zu der ersten Gegenanschlagfläche 54 ausgestaltet ist und die zweite Anschlagfläche 48 korrespondierend zu der zweiten Gegenanschlagfläche 56 ausgestaltet ist. Ferner ist es bevorzugt, dass die Flächen 46, 48, 54, 56 jeweils ringsherum um ihre jeweiligen Längsachsen 18, 20, 52 einen konstanten Winkel zu deren jeweilige Längsachse 18, 20, 52 haben. Sofern dieser Winkel kleiner 90° ist, liegen die Flächen 46, 48, 54, 56 also auf einem Kegel.

Ferner sei erwähnt, dass die Anschlagelemente 32, 42 wie auch die Durchgangsöffnung 24 nicht zwangsläufig zylindrisch ausgestaltet sein müssen. Es ist jedoch bevorzugt, dass es sich bei den Anschlagelementen 32, 42 um Rotationskörper, also rotationssymmetrische Elemente handelt, da die Instrumente 12, 14 rotatorisch angetrieben werden. Sofern die Anschlagelemente 32, 42 und die Abschnitte 62, 64 der Durchgangsöffnung 24 nicht zylindrisch ausgestaltet sind, gelten oben genannte, bevorzugte Durchmesserverhältnisse dennoch. Als Durchmesser wird jeweils die größtmögliche Sehne orthogonal zu den Längsachsen 18, 20 bzw. 52 bezeichnet.

## Patentansprüche

1. System (10) zur Vorbereitung und/oder Durchführung einer Zahnimplantatsinsertion, aufweisend:
- ein erstes Instrument (12), das dazu eingerichtet ist, eine Bohrung in einem Kieferknochen und/oder in einer den Kieferknochen umgebenden Schleimhaut zu erzeugen oder zu bearbeiten, wobei das erste Instrument (12) als Bohrwerkzeug, Senkwerkzeug, Schlichtwerkzeug, Räumwerkzeug, Gewindebohrwerkzeug oder Implant-Einbringinstrument ausgebildet ist und einen ersten Schaft (26), ein erstes Anschlagelement (32) und eine an dem ersten Schaft (26) stirnseitig angeordnete erste Bearbeitungsspitze (30) aufweist, wobei das erste Anschlagelement (32) von dem ersten Schaft (26) radial absteht und eine erste Anschlagfläche (46) aufweist,
- ein zweites Instrument (14), das dazu eingerichtet ist, die Bohrung in dem Kieferknochen und/oder in der Schleimhaut zu erzeugen oder zu bearbeiten oder ein Zahnimplantat in die Bohrung einzubringen, wobei das zweite Instrument (14) als Bohrwerkzeug, Senkwerkzeug, Schlichtwerkzeug, Räumwerkzeug, Gewindebohrwerkzeug oder Implant-Einbringinstrument ausgebildet ist und einen zweiten Schaft (36), ein zweites Anschlagelement (42) und eine an dem zweiten Schaft (36) stirnseitig angeordnete zweite Bearbeitungsspitze (40) aufweist, wobei das zweite Anschlagelement (42) von dem zweiten Schaft (36) radial absteht und eine zweite Anschlagfläche (48), die sich in Form und/oder Größe von der ersten Anschlagfläche (46) unterscheidet, aufweist, und wobei das zweite Anschlagelement (42) fix an dem zweiten Schaft (36) angeordnet ist.
- eine Führungsvorrichtung (16), die auf zumindest einem Zahn, dem Kieferknochen und/oder der Schleimhaut mittelbar oder unmittelbar positionierbar ist und zumindest eine Hülse (22) aufweist, die der Führung des ersten und zweiten Instruments (12, 14) während des Erzeugens und/oder Bearbeitens der Bohrung dient und eine entlang einer Längsachse (52) verlaufende Durchgangsöffnung (24) hat, durch welche das erste Instrument (12) und das zweite Instrument (14) jeweils hindurchführbar sind,
wobei die Hülse (22) eine mit der ersten Anschlagfläche (46) korrespondierende erste Gegenanschlagfläche (54) und eine mit der zweiten Anschlagfläche (48) korrespondierende zweite Gegenanschlagfläche (56) aufweist, und wobei die zweite Gegenanschlagfläche (56) entlang der Längsachse (52) versetzt zu der ersten Gegenanschlagfläche (54) angeordnet ist,
**dadurch gekennzeichnet, dass** das erste Anschlagelement (32) fix an dem ersten Schaft (26) angeordnet ist.

2. System nach Anspruch 1, wobei die Form und/oder Größe der ersten Anschlagfläche (46) derart ausgestaltet ist, dass das erste Anschlagelement (32) beim Hindurchführen des ersten Instruments (12) durch die Durchgangsöffnung (24) an der zweiten Gegenanschlagfläche (56) vorbei in die Durchgangsöffnung (24) einführbar ist, bis die erste Anschlagfläche (46) an der ersten Gegenanschlagfläche (54) anschlägt, und wobei die Form und/oder Größe der zweiten Anschlagfläche (48) derart ausgestaltet ist, dass das zweite Instrument (14) durch die Durchgangsöffnung (24) hindurchführbar ist, bis die zweite Anschlagfläche (48) an der zweiten Gegenanschlagfläche (56) anschlägt.

3. System nach Anspruch 1 oder 2, wobei die erste Gegenanschlagfläche (54) und die zweite Gegenanschlagfläche (56) die Durchgangsöffnung (24) jeweils zumindest teilweise umgeben und/oder deren Rand bilden.

4. System nach einem der Ansprüche 1-3, wobei die Durchgangsöffnung (24) als Stufenbohrung ausgestaltet ist und die erste Gegenanschlagfläche (54) an einer Stufe der Stufenbohrung im Inneren der Hülse (22) angeordnet ist.

5. System nach einem der Ansprüche 1-4, wobei ein Durchmesser des ersten Anschlagelements (32) D, ist, wobei ein Durchmesser des zweiten Anschlagelements (42) D₂ ist, wobei ein Innendurchmesser der ersten Gegenanschlagfläche (54) d₁ ist, wobei ein Innendurchmesser der zweiten Gegenanschlagfläche (56) d₂ ist, und wobei gilt: D₂ > d₂ ≥ D₁ > d₁.

6. System nach einem der Ansprüche 1-5, wobei ein Durchmesser (d₂) der Durchgangsöffnung (24) in einem Abschnitt (62) zwischen einem oberen Ende (58) der Hülse (22) und der ersten Gegenanschlagfläche (54) gleich groß wie oder größer als der Durchmesser (D₁) des ersten Anschlagelements (32), aber kleiner als ein Durchmesser (D₂) des zweiten Anschlagelements (42) ist.

7. System nach einem der Ansprüche 1-6, wobei ein Außendurchmesser der ersten Gegenanschlagfläche (54) und ein Innendurchmesser (d₂) der zweiten Gegenanschlagfläche (56) gleich groß sind.

8. System nach einem der Ansprüche 1-7, wobei die erste Gegenanschlagfläche (54) und die zweite Gegenanschlagfläche (56) jeweils quer, vorzugsweise orthogonal zu der Längsachse (52) verlaufen.

9. System nach einem der Ansprüche 1-8, wobei die erste Gegenanschlagfläche (54) und die zweite Gegenanschlagfläche (56) parallel zueinander ausgerichtet sind.

10. System nach einem der Ansprüche 1-9, wobei die erste Anschlagfläche (46), die zweite Anschlagfläche (48), die ersten Gegenanschlagfläche (54) und die zweite Gegenanschlagfläche (56) jeweils ringförmig oder ringausschnittsförmig ausgestaltet sind.

11. System nach einem der Ansprüche 1-10, wobei das erste Instrument (12) einen ersten Schaftabschnitt (34) aufweist, der zwischen dem ersten Anschlagelement (32) und der ersten Bearbeitungsspitze (30) angeordnet ist und einen ersten Durchmesser (D) hat, welcher kleiner als ein Durchmesser (D₁) des ersten Anschlagelements (32) und größer als ein Durchmesser der ersten Bearbeitungsspitze (30) ist, und wobei das zweite Instrument (14) einen zweiten Schaftabschnitt (44) aufweist, der zwischen dem zweiten Anschlagelement (42) und der zweiten Bearbeitungsspitze (40) angeordnet ist und einen zweiten Durchmesser (D) hat, welcher kleiner als ein Durchmesser (D₂) des zweiten Anschlagelements, größer als ein Durchmesser der zweiten Bearbeitungsspitze (40) und gleich groß wie der erste Durchmesser (D) ist.

12. System nach Anspruch 11, wobei in der Hülse (22) eine die Durchgangsöffnung (24) radial begrenzende Innenmantelfläche (66) angeordnet ist, deren Querschnittsform und -größe an die Querschnittsform und -größe des ersten und zweiten Schaftabschnitts (34, 44) angepasst ist, und wobei die erste Gegenanschlagfläche (54) entlang der Längsachse (52) zwischen der zweiten Gegenanschlagfläche (54) und der Innenmantelfläche (66) angeordnet ist.

## Claims

1. A system (10) for preparing and/or performing a dental implant placement, comprising:
- a first instrument (12) configured to produce or machine a bore in a jaw bone and/or in a mucous membrane surrounding the jaw bone, wherein the first instrument (12) is formed as a drilling tool, countersinking tool, finishing tool, reaming tool, tapping tool or implant insertion instrument and comprises a first shank (26), a first stop element (32) and a first machining tip (30) arranged on the end face of the first shank (26), tapping tool or implant insertion instrument and has a first shank (26), a first stop element (32) and a first machining tip (30) arranged on an end face of the first shank (26), the first stop element (32) projecting radially from the first shank (26) and comprising a first stop surface (46),
- a second instrument (14) configured to produce or machine the bore in the jaw bone and/or in the mucous membrane or to insert a dental implant into the bore, wherein the second instrument (14) is formed as a drilling tool, countersinking tool, finishing tool, reaming tool, tapping tool or implant insertion instrument and comprises a second shank (36), a second stop element (42) and a second machining tip (40) arranged on the end face of the second shank (36), the second stop element (42) projecting radially from the second shank (36) and comprising a second stop surface (48) which differs in shape and/or size from the first stop surface (46), and wherein the second stop element (42) is arranged fixedly on the second shank (36).
- a guide device (16) which can be positioned directly or indirectly on at least one tooth, the jawbone and/or the mucous membrane and which comprises at least one sleeve (22) serving to guide the first and second instruments (12, 14) during the production and/or processing of the bore and having a through-opening (24) extending along a longitudinal axis (52), through which the first instrument (12) and the second instrument (14) can each be guided,
wherein the sleeve (22) comprises a first counter-stop surface (54) corresponding to the first stop surface (46) and a second counter-stop surface (56) corresponding to the second stop surface (48), and wherein the second counter-stop surface (56) is arranged offset along the longitudinal axis (52) relative to the first counter-stop surface (54),
**characterized in that** the first stop element (32) is arranged fixedly on the first shaft (26).

2. The system according to claim 1, wherein the shape and/or size of the first stop surface (46) is configured such that the first stop element (32) can be inserted past the second counter-stop surface (56) into the through-opening (24) when the first instrument (12) is passed through the through-opening (24), until the first stop surface (46) abuts against the first counter-stop surface (54), and wherein the shape and/or size of the second stop surface (48) is configured such that the second instrument (14) can be guided through the through-opening (24) until the second stop surface (48) abuts against the second counter-stop surface (56).

3. The system according to claim 1 or 2, wherein the first counter-stop surface (54) and the second counter-stop surface (56) each at least partially surround the through opening (24) and/or form an edge thereof.

4. The system according to any one of claims 1-3, wherein the through opening (24) is configured as a stepped bore, and wherein the first counter-stop surface (54) is arranged at a step of the stepped bore inside the sleeve (22).

5. The system according to any one of claims 1-4, wherein a diameter of the first stop element (32) is D₁ , wherein a diameter of the second stop element (42) is D₂, wherein an inner diameter of the first counter-stop surface (54) is d₁, wherein an inner diameter of the second counter-stop surface (56) is d₂, and wherein: D₂ > d₂ ≥ D₁ > d₁.

6. The system according to any one of claims 1-5, wherein a diameter (d₂) of the through opening (24) in a portion (62) between an upper end (58) of the sleeve (22) and the first counter-stop surface (54) is equal to or larger than the diameter (D₁) of the first stop element (32), but smaller than a diameter (D₂) of the second stop element (42).

7. The system according to any one of claims 1-6, wherein an outer diameter of the first counter-stop surface (54) and an inner diameter (d₂) of the second counter-stop surface (56) are of equal size.

8. The system according to any one of claims 1-7, wherein the first counter-stop surface (54) and the second counter-stop surface (56) each extend transversely, preferably orthogonally to the longitudinal axis (52).

9. The system according to any one of claims 1-8, wherein the first counter-stop surface (54) and the second counter-stop surface (56) are aligned parallel to each other.

10. The system according to any one of claims 1-9, wherein the first stop surface (46), the second stop surface (48), the first counter-stop surface (54) and the second counter-stop surface (56) are each of annular shape or annular sector shape.

11. The system according to any one of claims 1-10, wherein the first instrument (12) comprises a first shaft portion (34) disposed between the first stop element (32) and the first machining tip (30) and having a first diameter (D) which is smaller than a diameter (D₁) of the first stop element (32) and larger than a diameter of the first machining tip (30), and wherein the second instrument (14) comprises a second shaft portion (44) disposed between the second stop element (42) and the second processing tip (40) and having a second diameter (D) which is smaller than a diameter (D₂) of the second stop element, larger than a diameter of the second processing tip (40) and the same size as the first diameter (D).

12. The system according to claim 11, wherein an inner lateral surface (66) radially delimiting the through opening (24) is arranged in the sleeve (22), the cross-sectional shape and size of which is adapted to the cross-sectional shape and size of the first and second shank portions (34, 44), and wherein the first counter-stop surface (54) is arranged along the longitudinal axis (52) between the second counter-stop surface (54) and the inner lateral surface (66).

## Revendications

1. Système (10) permettant la préparation et/ou la réalisation d'une insertion d'implant dentaire, présentant :
- un premier instrument (12) qui est conçu pour générer ou façonner un perçage dans un os de la mâchoire et/ou dans une muqueuse entourant l'os de la mâchoire, dans lequel le premier instrument (12) est réalisé sous forme d'outil de perçage, outil de lamage, outil de finition, outil de brochage, outil de taraudage ou instrument d'introduction d'implant et présente une première tige (26), un premier élément de butée (32) et une première pointe de façonnage (30) disposée côté frontal sur la première tige (26), dans lequel le premier élément de butée (32) dépasse radialement de la première tige (26) et présente une première surface de butée (46),
- un second instrument (14) qui est conçu pour générer ou façonner le perçage dans l'os de la mâchoire et/ou dans la muqueuse ou pour introduire un implant dentaire dans le perçage, dans lequel le second instrument (14) est réalisé sous forme d'outil de perçage, outil de lamage, outil de finition, outil de brochage, outil de taraudage ou instrument d'introduction d'implant, et présente une seconde tige (36), un second élément de butée (42) et une seconde pointe de façonnage (40) disposée côté frontal sur la seconde tige (36), dans lequel le second élément de butée (42) dépasse radialement de la seconde tige (36) et présente une seconde surface de butée (48) qui se distingue de la première surface de butée (46) par sa forme et/ou sa taille, et dans lequel le second élément de butée (42) est disposé de manière fixe sur la seconde tige (36),
- un dispositif de guidage (16) qui peut être positionné directement ou indirectement sur au moins une dent, l'os de la mâchoire et/ou la muqueuse et qui présente au moins une douille (22) qui sert au guidage du premier et du second instrument (12, 14) pendant la génération et/ou le façonnage du perçage et qui possède une ouverture de passage (24) s'étendant le long d'un axe longitudinal (52), à travers laquelle le premier instrument (12) et le second instrument (14) peuvent être respectivement guidés,
dans lequel la douille (22) présente une première surface de contre-butée (54) correspondant à la première surface de butée (46) et une seconde surface de contre-butée (56) correspondant à la seconde surface de butée (48), et dans lequel la seconde surface de contre-butée (56) est disposée le long de l'axe longitudinal (52) de manière à être décalée par rapport à la première surface de contre-butée (54),
**caractérisé en ce que** le premier élément de butée (32) est disposé de manière fixe sur la première tige (26).

2. Système selon la revendication 1, dans lequel la forme et/ou la taille de la première surface de butée (46) sont conçues de telle sorte que le premier élément de butée (32) peut pénétrer dans l'ouverture de passage (24) en passant devant la seconde surface de contre-butée (56) lors du guidage du premier instrument (12) à travers l'ouverture de passage (24), jusqu'à ce que la première surface de butée (46) vienne en butée contre la première surface de contre-butée (54), et dans lequel la forme et/ou la taille de la seconde surface de butée (48) sont conçues de telle sorte que le second instrument (14) peut être guidé à travers l'ouverture de passage (24) jusqu'à ce que la seconde surface de butée (48) vienne en butée contre la seconde surface de contre-butée (56).

3. Système selon la revendication 1 ou 2, dans lequel la première surface de contre-butée (54) et la seconde surface de contre-butée (56) entourent respectivement au moins partiellement l'ouverture de passage (24) et/ou forment son bord.

4. Système selon l'une des revendications 1 à 3, dans lequel l'ouverture de passage (24) est conçue sous forme de perçage étagé et la première surface de contre-butée (54) est disposée sur un étage du perçage étagé à l'intérieur de la douille (22).

5. Système selon l'une des revendications 1 à 4, dans lequel un diamètre du premier élément de butée (32) est D₁, dans lequel un diamètre du second élément de butée (42) est D₂, dans lequel un diamètre intérieur de la première surface de contre-butée (54) est d₁, dans lequel un diamètre intérieur de la seconde surface de contre-butée (56) est d₂, et dans lequel on a : D₂ > d₂ ≥ D₁ > d₁.

6. Système selon l'une des revendications 1 à 5, dans lequel un diamètre (d₂) de l'ouverture de passage (24) dans une section (62) entre une extrémité supérieure (58) de la douille (22) et la première surface de contre-butée (54) est égal ou supérieur au diamètre (D₁) du premier élément de butée (32), mais inférieur à un diamètre (D₂) du second élément de butée (42).

7. Système selon l'une des revendications 1 à 6, dans lequel un diamètre extérieur de la première surface de contre-butée (54) et un diamètre intérieur (d₂) de la seconde surface de contre-butée (56) sont égaux.

8. Système selon l'une des revendications 1 à 7, dans lequel la première surface de contre-butée (54) et la seconde surface de contre-butée (56) s'étendent respectivement transversalement, de préférence orthogonalement, par rapport à l'axe longitudinal (52).

9. Système selon l'une des revendications 1 à 8, dans lequel la première surface de contre-butée (54) et la seconde surface de contre-butée (56) sont orientées parallèlement l'une à l'autre.

10. Système selon l'une des revendications 1 à 9, dans lequel la première surface de butée (46), la seconde surface de butée (48), la première surface de contre-butée (54) et la seconde surface de contre-butée (56) sont respectivement conçues en forme d'anneau ou de découpe annulaire.

11. Système selon l'une des revendications 1 à 10, dans lequel le premier instrument (12) présente une première section de tige (34) qui est disposée entre le premier élément de butée (32) et la première pointe de façonnage (30) et possède un premier diamètre (D) qui est inférieur à un diamètre (D₁) du premier élément de butée (32) et supérieur à un diamètre de la première pointe de façonnage (30), et dans lequel le second instrument (14) présente une seconde section de tige (44) qui est disposée entre le second élément de butée (42) et la seconde pointe de façonnage (40) et possède un second diamètre (D) qui est inférieur à un diamètre (D₂) du second élément de butée, supérieur à un diamètre de la seconde pointe de façonnage (40) et égal au premier diamètre (D).

12. Système selon la revendication 11, dans lequel une surface d'enveloppe intérieure (66) délimitant radialement l'ouverture de passage (24) est disposée dans la douille (22), surface d'enveloppe intérieure dont la forme et la taille de la section transversale sont adaptées à la forme et à la taille de la section transversale de la première et de la seconde section de tige (34, 44), et dans lequel la première surface de contre-butée (54) est disposée le long de l'axe longitudinal (52), entre la seconde surface de contre-butée (54) et la surface d'enveloppe intérieure (66).
